# EUROPÄISCHE PATENTANMELDUNG

(11) **EP 2 784 439 A1**
(43) Veröffentlichungstag der Anmeldung: **01.10.2014**
(21) Anmeldenummer: 13189326.5
(22) Anmeldetag: 18.10.2013
(51) Int. Cl.: G01B 11/27, E02D 13/06

(54) **Sensoranordnung zur Bestimmung der Ausrichtung eines Pfahls**

(30) Priorität: 27.03.2013 DE 102013205512
(71) Anmelder: Menck GmbH, 24568 Kalternkirchen (DE)
(72) Erfinder: Kropf, Rainer, 24558 Henstedt-Ulzburg (DE)
(74) Vertreter: Kloiber, Thomas

(57) **Zusammenfassung**

Eine Sensoranordnung zur Bestimmung der Ausrichtung eines in einen Untergrund eingerammten Pfahls (5), dessen oberer Abschnitt von einer Pfahlführung (2) umgeben ist, mit einem im Rammbetrieb auf der Oberseite des Pfahls (5) aufliegenden Schlagmedium (4), das sich in radialer Richtung über den Pfahl (5) hinaus und zumindest bis über Teilabschnitte (8) der Pfahlführung (2) erstreckt, ist zur Erzielung einer hohen Messgenauigkeit unter besonders rauen Betriebsbedingungen erfindungsgemäß dadurch gekennzeichnet, dass die Sensoranordnung mindestens drei an der Pfahlführung (2) angeordnete optische Abstandsmesser (6) aufweist, mit denen die vertikalen Abstände (7) zwischen den Abstandsmessern (6) und der Unterseite (9) des Schlagmediums (4) an mindestens drei verschiedenen Messstellen (8) des Schlagmediums (4) messbar sind.

## Beschreibung

Die vorliegende Erfindung betrifft eine Sensoranordnung zur Bestimmung der Ausrichtung eines in einen Untergrund eingerammten Pfahls, dessen oberer Abschnitt von einer Pfahlführung umgeben ist, mit einem im Rammbetrieb auf der Oberseite des Pfahls aufliegenden Schlagmedium, das sich in radialer Richtung über den Pfahl hinaus und zumindest bis über Teilabschnitte der Pfahlführung erstreckt.

Beim Einrammen von Pfählen in einen Untergrund, beispielsweise von Gründungspfählen in den Meeresboden, insbesondere von Einzelpfählen für die Verankerung von Windenergieanlagen im Offshore-Bereich, weicht die Ausrichtung des eingerammten Pfahls geringfügig von der Vertikalen ab, was besonders bei Windräder tragenden Monopfählen ausgeglichen werden muss, damit die Türme der Windräder möglichst genau vertikal ausgerichtet sind. Genauer gesagt muss die Abweichung der Auflagefläche des Pfahlkopfes von der Horizontalebene ausgeglichen werden, weil diese Auflagefläche die Ausrichtung des Turms des Windrades bestimmt. Um dies überprüfen zu können und ggf. einen Ausgleich schaffen zu können, beispielsweise durch einen geneigten Adapter zwischen dem Pfahl und dem Turm des Windrades, muss die Abweichung der Auflagefläche des Pfahlkopfes von der Horizontalebene genau bekannt sein.

Aufgabe der Erfindung ist es daher, eine Sensoranordnung der eingangs genannten Art anzugeben, die trotz der im Rammbetrieb auftretenden Beschleunigungen eine für die genannten Zwecke ausreichend genaue Bestimmung der Ausrichtung der Auflagefläche des Pfahlkopfes von der Horizontalebene ermöglicht.

Die Erfindung löst diese Aufgabe durch eine Sensoranordnung mit mindestens drei an der Pfahlführung angeordneten optischen Abstandsmessern, mit denen die vertikalen Abstände zwischen den Abstandsmessern und der Unterseite des Schlagmediums an mindestens drei verschiedenen Stellen des Schlagmediums messbar sind. Optische Abstandsmesser lassen sich relativ robust ausgestalten, sodass sie im Rammbetrieb keinen Schaden nehmen. Des Weiteren sind die Abstandsmesser an der Pfahlführung angebracht, die im Rammbetrieb nicht vom Rammhammer getroffen wird. Die während des Rammbetriebs an der Pfahlführung auftretenden Beschleunigungen sind daher wesentlich geringer als an dem Schlagmedium. Wenn man mindestens drei Abstände zwischen der bekannten Position der Pfahlführung und dem Schlagmedium kennt, kann man die relative Neigung zur Auflagefläche des Schlagmediums gegenüber der Horizontalen auf relativ einfache Weise berechnen.

Zur Darstellung der Neigung werden Polarkoordinaten empfohlen, wobei die eine Koordinate die Richtung der Neigung zwischen 0° und 359° mit einer Genauigkeit von 5° angibt und die andere Koordinate die Abweichung des Schlagmediums von der Horizontalen zwischen 0° und 2° mit einer Genauigkeit von 0,1 ° angibt. Da das Schlagmedium auf der Oberseite des Pfahls aufliegt, hat die Winkelabweichung des Schlagmediums von der horizontalen Ebene denselben Wert wie die Abweichung der Pfahlachse von der Vertikalen, sofern die Auflagefläche des Pfahlkopfes genau ortogonal zur Pfahlachse ausgerichtet ist.

Um die Messgenauigkeit zu verbessern, wird empfohlen, das vier Abstandsmesser in Winkelabständen von circa 90° an der Pfahlführung angeordnet sind. Die Genauigkeit kann mit bis zu sechs Abstandsmessern weiter verbessert werden, jedoch muss der hierfür erforderliche zusätzliche apparative und finanzielle Aufwand gegen die Verbesserung der Winkelmessung abgewogen werden.

In einer bevorzugten Ausführungsform weist ein Abstandsmesser eine Lichtquelle auf, die einen zur Vertikalen abgewinkeltes Lichtbündel auf das Schlagmedium projiziert, welches von der Unterseite des Schlagmediums reflektiert wird und auf einen im horizontalen Abstand zur Lichtquelle und radial zum Pfahl angeordneten Lichtdetektor trifft, sodass die beiden Abschnitte des Lichtbündels zusammen mit einer Verbindungslinie zwischen Lichtquelle und Lichtdetektor ein Dreieck bilden, wobei der vertikale Abstand zwischen Abstandsmesser und Schlagmedium geometrisch bestimmbar ist. Die Verbindungslinie zwischen Lichtquelle und Lichtdetektor muss radial zum Pfahl angeordnet sein, weil ansonsten der Auftreffort des reflektierten Lichtbündels nicht nur vom Abstand des Schlagmediums zum Abstandssensor, sondern auch von dessen Neigungswinkel beeinflusst werden könnten. Verändert sich der Abstand des Schlagmediums bei der genannten Anordnung, so bleibt der Reflektionswinkel näherungsweise konstant. Veränderlich ist lediglich die Größe des durch die Lichtbündel und die Verbindungslinie gebildeten Dreiecks, sodass sich der Abstand zwischen Lichtquelle und dem Ort, an dem das reflektierte Lichtbündel auf den Lichtdetektor trifft, verschiebt.

In einer besonders robusten Ausführungsform der Erfindung ist die Lichtquelle ein Halbleiterlaser. Ein Halbleiterlaser ist für den rauen Einsatzweck bestens geeignet und das Laserlicht lässt sich bei hoher Intensität gut bündeln.

In einer bevorzugten Ausführungsform ist vorgesehen, dass der Lichtdetektor eine ortsauflösender Detektor ist, mit dem der Ort bestimmbar ist, an dem das Lichtbündel den Lichtdetektor trifft. Durch diese Maßnahme kann der Ort des Auftreffens des Lichtbündels mit elektronischen Mitteln bestimmt werden, ohne dass hierfür eine mechanische Justierung erforderlich wäre.

In weiterer Ausgestaltung der Erfindung ist der Lichtdetektor ein lineares CCD- oder CMOS-Sensorarray. Diese Sensorarrays sind robust und kostengünstig zu beschaffen.

Die Messgenauigkeit kann noch verbessert werden, indem aus der Intensitätsverteilung des Lichtbündels auf dem Lichtdetektor ein Punkt maximaler Intensität bestimmbar ist.

Mit Vorteil sind die Abstandsmesser in die Pfahlführung eingebaut und somit weitgehend vor Beschädigungen durch äußere mechanische Einwirkung geschützt.

Um mögliche Abweichungen der Ausrichtung der Pfahlführung zu erfassen, die zu falschen Absolutwerten der relativen Lagebestimmung des Schlagmediums und damit des Pfahls führen würden, dient eine Maßnahme, wonach die Pfahlführung mit mindestens einem zweidimensionalen Inklinometer versehen ist, welches zur Bestimmung der absoluten Neigung der Abstandsmesser gegenüber der Horizontalebene dient. Je mehr Inklinometer für die Messung verwendet werden, desto genauer wird die Genauigkeit der Bestimmumg.

In weiterer Ausgestaltung der zuletzt genannten Ausführungsform wird vorgeschlagen, dass das Inklinometer als zweidimensionaler Beschleunigungssensor mit einem Messbereich von 0....2g ausgestaltet und in einen oder mehrere Abstandssensoren integriert ist. Vorzugsweise ist jeder Abstandssensor zusätzlich mit den genannten Beschleunigungssensoren versehen.

Eine Weiterbildung der Erfindung sieht vor, dass die Abstandssensoren untereinander datentechnisch vernetzt sind, vorzugsweise über einen CAN-Bus. Diese Maßnahme erlaubt die zentrale Auswertung der Sensordaten.

Vorzugsweise ist ein als Master-Sensor dienender Abstandssensor mit einem Mikroprozessor versehen, der die Daten aller Abstandssensoren verarbeitet und die absolute Winkellage des Schlagmediums berechnet.

In einer bevorzugten Ausführungsform der Erfindung beträgt der Abstandsmessbereich zwischen 50 mm und 170 mm. Dieser Bereich entspricht den geometrischen Gegebenheiten des Schlagmediums im Verhältnis zur Pfahlführung und ist mit den vorgeschlagenen Abstandsmessern gut beherrschbar.

Eine zusätzliche Verbesserung der Erfindung sieht vor, dass die Abstandsmesser mit Druckluftdüsen zum Entfernen von Verschmutzungen versehen sind. Die Auswerteelektronik kann anhand der Intensitätsverteilung des auf den Lichtdetektor fallenden Lichtbündels Verschmutzungen im Strahlenweg automatisch erkennen und löst dann ein Ventil aus, wodurch die Druckluftdüsen mit Druckluft beaufschlagt werden, die die Verschmutzungen wegbläst.

Vorzugsweise werden die Abstandsmessungen in Pausen des Rammvorgangs durchgeführt, wenn Pfahl, Schlagmedium und Pfahlführung keinen wesentlichen Erschütterungen ausgesetzt sind, die die Messung verfälschen könnten.

Ausführungsbeispiele der Erfindung werden nachfolgend anhand der Zeichnungen näher erläutert.

Die Figuren der Zeichnung zeigen im Einzelnen:
- Figur 1:: einen Hydraulikhammer zum Rammen von Pfählen;
- Figur 2:: eine Pfahlführung;
- Figur 3:: eine schematische Darstellung der Anordnung von Hammer, Schlagmedium und Pfahl;
- Figur 4:: in schematischer Darstellung einen Horizontalschnitt durch eine Pfahlführung mit vier Abstandssensoren;
- Figur 5:: in schematischer Darstellung einen Vertikalschnitt durch eine Pfahlführung mit Schlagmedium und Pfahl;
- Figur 6:: eine schematische Darstellung der Messanordnung von Abstandsmesser und Schlagmedium;
- Figur 7:: ein Detail der Pfahlführung mit Abstandssensor im Schnitt.

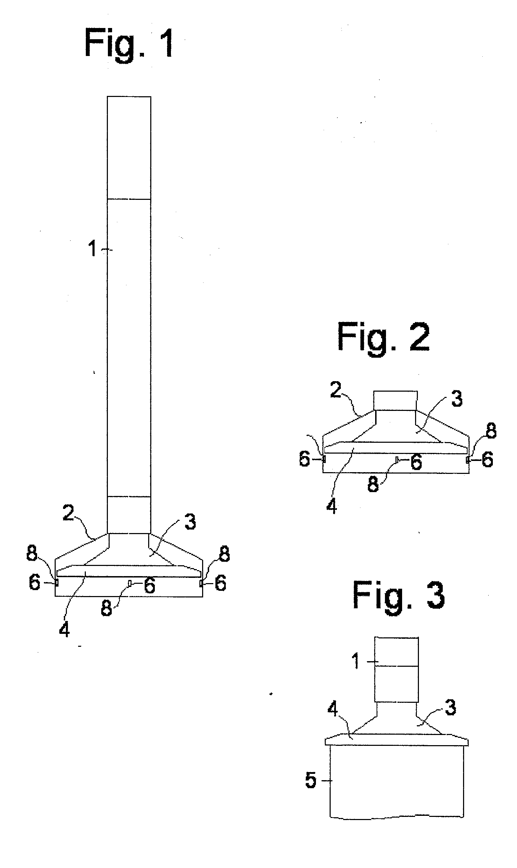

In Figur 1 erkennt man einen hydraulischen Hammer 1, dessen unterer Abschnitt mit einer Pfahlführung 2 verbunden ist. Eine detailliertere Darstellung der Pfahlführung 2 ohne Hammer 1 findet man in Figur 2. Wie man in Figur 3 erkennt, ist unterhalb des Hammers 1 eine Schlagplatte 3 angeordnet, auf die die Schläge des Hammers 1 einwirken. Zwischen der Schlagplatte 3 und dem Pfahl 5 ist als Schlagmedium 4 eine Adapterplatte angeordnet, die zur Anpassung an den jeweiligen Pfahl 5 dient.

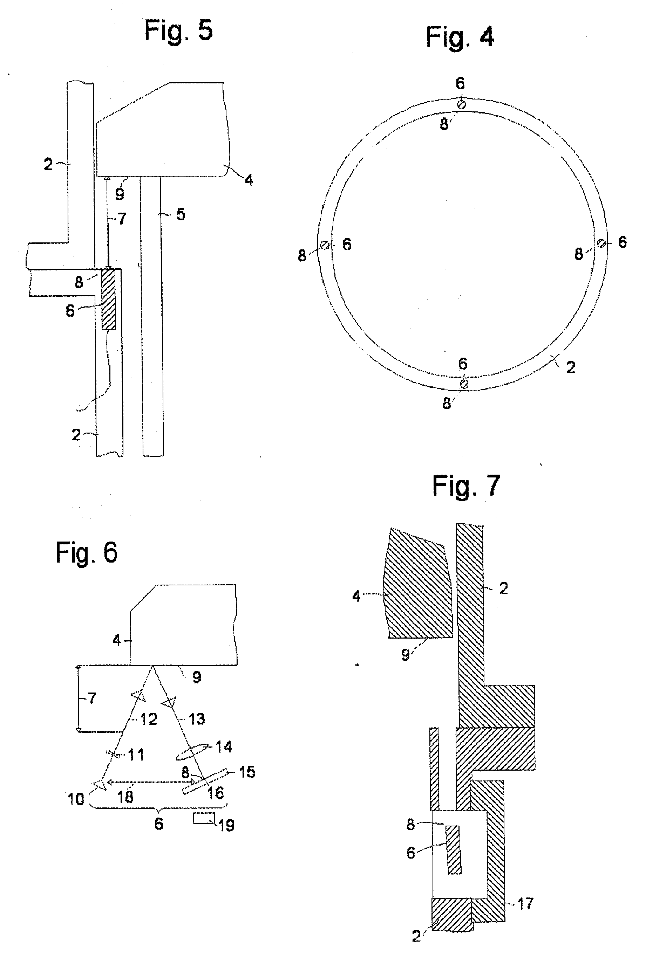

Wie man am besten in den Figuren 4 und 5 erkennt, ist ein ringförmiger Randbereich der Pfahlführung 2 mit vier Abstandsmessern 6 versehen, durch die der Abstand 7 zwischen den Messstellen 8 an der Pfahlführung 2 und der Unterseite 9 des Schlagmediums 4 (Adapterplatte) gemessen werden können. Die Messstellen 8 sind rund um die Pfahlführung 2 in 90°-Abständen innerhalb einer horizontalen Ebene angeordnet.

Figur 6 zeigt das Messprinzip der Abstandsmesser 6. Von einem Halbleiterlaser 10 geht ein Lichtstrahl aus, der durch eine Fenster 11 tritt und als Lichtbündel 12 auf die Unterseite 9 des Schlagmediums 4 trifft und dort reflektiert wird. Das reflektierte Lichtbündel 13 wird im Abstandsmesser 6 mittels einer weiteren Linse 14 auf ein lineares CCD-Sensorarray 15 konzentriert, das im horizontalen Abstand 18 zur Lichtquelle 10 und radial zum Pfahl 5 angeordnet ist.

Das Sensorarray 15 ist in der Lage, den Ort 16 zu bestimmen, an dem das reflektierte Laserlicht auf das Sensorarray 15 trifft. Verändert sich der Abstand 7 zwischen der Unterseite 9 des Schlagmediums 4 und dem Abstandsmesser 6, so verschiebt sich auch der Ort 16 des Auftreffens des reflektierten Lichtes auf dem Sensorarray 15. Wenn beispielsweise der Abstand 7 vergrößert wird, trifft das Lichtbündel 12 die Unterseite 9 des Schlagmediums 4 weiter rechts, wodurch das reflektierte Lichtbündel 13 noch weiter nach rechts verschoben wird. Deshalb wird der Ort 16 des Lichtflecks auf dem Sensorarray 15 verschoben. Der genaue Ort kann mit elektronischen Mitteln bestimmt werden und zwar mit einer höheren Genauigkeit als der Durchmesser des auftreffenden Lichtbündels, denn mittels einer geeigneten Auswerteelektronik lässt sich das Maximum oder der Schwerpunkt der Lichtintensität des auf das Sensorarray 15 fallenden Lichtflecks ermitteln. Dabei ist die Verschiebung des Ortes 16 auf dem Sensorarray 15 proportional zum Abstand 7 zwischen dem Abstandsmesser 6 und der Unterseite 9 des Schlagmediums 4.

Wenn man mindestens drei, besser vier oder noch besser sechs Abstandsmesser 6 verwendet, kann man die Neigung des Schlagmediums 4 gegenüber der Pfahlführung 2 aus drei, vier oder beispielsweise sechs gemessenen Abständen 7 ermitteln. Die so erhaltenen Polarkoordinaten sind umso genauer, je mehr Abstandsmesser 6 man verwendet. Bei vier Abstandsmessern 6 konnte eine Genauigkeit von 0,1 ° für die Abweichung des Schlagmediums 4 von der Horizontalen und eine Genauigkeit von 5° für die Richtung der Abweichung erreicht werden.

Wie man in Figur 7 erkennt, ist der Abstandsmesser 6 in die Pfahlführung 2 so eingebaut, dass er vor mechanischen Einwirkungen von innen und außen bestens geschützt ist und außerdem auch bei einer auf dem Pfahl 5 montierten Pfahlführung 2 stets für Wartungsarbeiten von außen zugänglich bleibt. Hierfür ist eine von außen demontierbare Abdeckung 17 vorgesehen.

Um eine von der korrekten Ausrichtung der Pfahlführung 2 etwa abweichende Neigung gegenüber der Horizontalebene feststellen zu können, ist jeder Abstandssensor 6 wie in Fig. 6 angedeutet mit einem zweidimensionalen Inklinometer 19 versehen, welches aus Beschleunigungssensoren besteht, die einen Messbereich von 0...2g aufweisen.

Des Weiteren sind die Abstandssensoren 6 und die Inklinometer 19 untereinander über einen CAN-Bus vernetzt, wobei ein Abstandsmesser 6 als Master-Sensor geschaltet ist, der die Daten aller Abstandsmesser 6 zusammenführt, abspeichert und mittels eines eingebauten Mikroprozessors verarbeitet, um so die absolute Winkellage des Schlagmediums 4 zu berechnen. Der Master-Sensor ist seinerseits wieder mit einer zentralen Steuerung des Rammhammers verbunden, wodurch es möglich wird, die Messungen der Abstände 7 dann vorzunehmen, wenn der Rammhammer gerade nicht in Betrieb ist. Durch diese Maßnahme werden die Messergebnisse erheblich verbessert.

Aus der Intensitätsverteilung des Leuchtflecks 16 auf dem Sensorarray 15 kann ein intelligentes Programm erkennen, ob sich im Strahlengang zwischen dem Laser 10 und dem Sensorarray 15 Verschmutzungen abgelagert haben. Wenn dies festgestellt wird, wird eine in den Figuren nicht gezeigte Pressluftdüse mit Pressluft beaufschlagt, wobei die Düse so angeordnet ist, dass die Verschmutzungen weggeblasen werden. Es können auch mehrere solche Düsen vorgesehen sein.

Besonders genaue Messungen erhält man unter den gegebenen Abmessungen der beteiligten Bauteile, wenn der Abstand 7 zwischen der Unterseite 9 des Schlagmediums 4 und dem Abstandsmesser 6 im Bereich zwischen 50 mm und 170 mm beträgt.

Vor Ort wird die Horizontalität der Auflagefläche des Pfahlkopfes vor Beginn der Rammung gemessen und der Pfahl 5 mittels der Pfahlführung 2 möglichst genau ausgerichtet, da dies nach Beginn des Rammvorgangs nicht mehr möglich ist. Nach Beendigung des Rammvorgangs wird eine weitere Messung der Horizontalität vorgenommen, die zur Bestimmung der verbleibenden Abweichung des Pfahls 5 dient. Je nach Ergebnis der letzten Messung wird entschieden, ob die Abweichung toleriert werden kann oder nicht. Ist die Abweichung zu groß, muss ein geneigter Adapter zwischen Pfahl und Windradturm eingefügt werden, dessen Neigung die Fehlstellung des Pfahls 5 ausgleicht. Die Werte für die Neigung des Adapters und seine Einbaulage ergeben sich dabei aus den Werten der genannten letzten Messung der Horizontalität der Auflagefläche des Pfahlkopfes nach dem Rammen.

### BEZUGSZEICHENLISTE

- 1: Hammer
- 2: Pfahlführung
- 3: Schlagplatte
- 4: Schlagmedium
- 5: Pfahl
- 6: Abstandsmesser
- 7: Abstand
- 8: Messstellen
- 9: Unterseite
- 10: Lichtquelle / Halbleiterlaser
- 11: Fenster
- 12: Lichtbündel
- 13: Lichtbündel
- 14: Linse
- 15: Sensorarray
- 16: Ort
- 17: Abdeckung
- 18: Abstand / Verbindungslinie
- 19: Inklinometer

## Patentansprüche

1. Sensoranordnung zur Bestimmung der Ausrichtung eines in einen Untergrund eingerammten Pfahls (5), dessen oberer Abschnitt von einer Pfahlführung (2) umgeben ist, mit einem im Rammbetrieb auf der Oberseite des Pfahls (5) aufliegenden Schlagmedium (4), das sich in radialer Richtung über den Pfahl (5) hinaus und zumindest bis über Teilabschnitte (8) der Pfahlführung (2) erstreckt, **dadurch gekennzeichnet, dass** die Sensoranordnung mindestens drei an der Pfahlführung (2) angeordnete optische Abstandsmesser (6) aufweist, mit denen die vertikalen Abstände (7) zwischen den Abstandsmessern (6) und der Unterseite (9) des Schlagmediums (4) an mindestens drei verschiedenen Messstellen (8) des Schlagmediums (4) messbar sind.

2. Sensoranordnung nach Anspruch 1, **dadurch gekennzeichnet, dass** vier Abstandsmesser (6) in Winkelabständen von circa 90° an der Pfahlführung (2) angeordnet sind.

3. Sensoranordnung nach Anspruch 1 oder 2, **dadurch gekennzeichnet, dass** ein Abstandsmesser (6) eine Lichtquelle (10) aufweist, die ein zur Vertikalen (7) abgewinkeltes Lichtbündel (12) auf das Schlagmedium (4) projiziert, welches von der Unterseite (9) des Schlagmediums (4) reflektiert wird und auf einen im horizontalen Abstand (18) zur Lichtquelle (10) und radial zum Pfahl (5) angeordneten Lichtdetektor (15) trifft, sodass die beiden Abschnitte (12, 13) des Lichtbündels zusammen mit einer Verbindungslinie (18) zwischen Lichtquelle (10) und
Lichtdetektor (15) ein Dreieck bilden, wobei der vertikale Abstand (7) zwischen Abstandsmesser (6) und Schlagmedium (4) geometrisch bestimmbar ist.

4. Sensoranordnung nach Anspruch 3, **dadurch gekennzeichnet, dass** die Lichtquelle (10) ein Halbleiterlaser ist.

5. Sensoranordnung nach Anspruch 3 oder 4, **dadurch gekennzeichnet, dass** der Lichtdetektor (15) ein ortsauflösender Detektor ist, mit dem der Ort (16) bestimmbar ist, an dem das reflektierte Lichtbündel (13) den Lichtdetektor (15) trifft.

6. Sensoranordnung nach Anspruch 5, **dadurch gekennzeichnet, dass** der Lichtdetektor (15) ein lineares CCD- oder CMOS-Sensorarray ist.

7. Sensoranordnung nach einem der Ansprüche 5 oder 6, **dadurch gekennzeichnet, dass** aus der Intensitätsverteilung des Lichtbündels (13) auf den Lichtdetektor (15) ein Punkt maximaler Intensität bestimmbar ist.

8. Sensoranordnung nach einem der vorhergehenden Ansprüche,
**dadurch gekennzeichnet, dass** die Abstandsmesser (6) in die Pfahlführung (2) eingebaut sind.

9. Sensoranordnung nach einem der vorhergehenden Ansprüche,
**dadurch gekennzeichnet, dass** die Pfahlführung (2) mit mindestens einem zweidimensionalen Inklinometer (19) versehen ist, welches zur Bestimmung der absoluten Neigung der Abstandsmesser (6) gegenüber der Horizontalebene dient.

10. Sensoranordnung nach Anspruch 9, **dadurch gekennzeichnet, dass** das Inklinometer (19) als zweidimensionaler Beschleunigungssensor mit einem Messbereich von 0...2g ausgestaltet und in einen oder mehrere Abstandssensoren (6) integriert ist.

11. Sensoranordnung nach einem der vorhergehenden Ansprüche,
**dadurch gekennzeichnet, dass** die Abstandssensoren (6) untereinander datentechnisch vernetzt sind, vorzugsweise über CAN-Bus.

12. Sensoranordnung nach Anspruch 11, **dadurch gekennzeichnet, dass** ein als Master-Sensor dienender Abstandssensor (6) mit einem Mikroprozessor versehen ist, der die Daten aller Abstandssensoren (6) verarbeitet und die absolute Winkellage des Schlagmediums (4) berechnet.

13. Sensoranordnung nach einem der vorhergehenden Ansprüche, **dadurch gekennzeichnet, dass** der Abstandsmessbereich zwischen 50 mm und 170 mm beträgt.

14. Sensoranordnung nach einem der vorhergehenden Ansprüche, **dadurch gekennzeichnet, dass** die Abstandsmesser (6) mit Druckluftdüsten zum Entfernen von Verschmutzungen versehen sind.

15. Sensoranordnung nach einem der vorhergehenden Ansprüche, **dadurch gekennzeichnet, dass** die Abtandsmessungen in Pausen des Rammvorgangs durchführbar sind.
